Europäisches Patentamt

European Patent Office

Office européen des brevets

(19)

(11) Publication number: **0 164 796**

**B1**

(12) **EUROPEAN PATENT SPECIFICATION**

(45) Date of publication of patent specification: **18.01.89**

(51) Int. Cl.⁴: **G 01 L 1/16,** G 01 V 1/047

(21) Application number: **85200846.5**

(22) Date of filing: **24.05.85**

(54) Multisensor ground-force measuring means for vibroseis.

(30) Priority: **12.06.84 GB 8414907**

(43) Date of publication of application:
**18.12.85 Bulletin 85/51**

(45) Publication of the grant of the patent:
**18.01.89 Bulletin 89/03**

(84) Designated Contracting States:
**DE FR GB IT NL**

(56) References cited:
**US-A-4 063 613**
**US-A-4 250 894**
**ELECTRONIC DESIGN, vol. 31, no. 11, May
1983, page 77E, Waseca, Minnesota, Denville,
New York, US; R. ALLAN: "Piezo polymer
promises low-cost robotic sensors"**
**JOURNAL OF APPLIED PHYSICS, vol. 51, no.
11, November 1980, pages 5601-5603,
American Institute of Physics, New York, US;
R.L. FORWARD: "Picostrain measurements
with piezoelectric transducers"**

(73) Proprietor: SHELL INTERNATIONALE
RESEARCH MAATSCHAPPIJ B.V.
Carel van Bylandtlaan 30
NL-2596 HR Den Haag (NL)

(72) Inventor: **Huizer, Willem**
**Volmerlaan 6**
**NL-2280 GD Rijswijk (NL)**
Inventor: **van der Toorn, Jacobus**
**Volmerlaan 6**
**NL-2280 GD Rijswijk (NL)**
Inventor: **van der Voort, Gabriel Nicolaas**
**Martinus Maria**
**Volmerlaan 6**
**NL-2280 GD Rijswijk (NL)**

(74) Representative: **Aalbers, Onno et al**
**P.O. Box 302**
**NL-2501 CH The Hague (NL)**

Courier Press, Leamington Spa, England.

## Description

The invention relates to vibratory seismic energy sources used for seismic prospecting. More in particular, the invention relates to a means for measuring the actual force, which in use, is imparted to the earth surface by a seismic vibrator.

In seismic prospecting vibratory sources, also called seismic vibrators, are used to impart vibratory seismic energy into the earth. An example of such a seismic vibrator has been described in U.S. patent specification 4,184,144.

Since known per se, seismic vibrators will not be described in detail. Generally, it can be said that a vibrator comprises a piston affixed to a coaxial piston rod. The piston is located in a cylinder formed within a heavy reaction mass. Means are included for alternately introducing hydraulic fluid under high pressure to opposite ends of the cylinder, thereby imparting a motion to the piston relative to the reaction mass. The said means are actuated by a pilot signal and may for example comprise a power valve, a pilot valve, a pump, a torque motor etc. The piston rod extending from the reaction mass is rigidly coupled to a ground coupling (also called base plate) which is maintained in contact with the ground. The inertia of the reaction mass tends to resist displacement of the reaction mass relative to the earth. The piston motion is coupled through the piston rod and base plate to impart vibratory seismic energy into the earth.

Several ways of mounting a vibrator exist. One example of a suitable mounting is vehicle mounting.

When the vehicle has arrived at a selected location, the base plate is lowered into contact with the ground and to prevent de-coupling of the base plate from the ground during operation, a portion of the vehicle's weight is applied to the base plate. The vehicle's weight is applied to the base plate through spring members in such a way that a static bias force is imposed on the base plate, while the dynamic forces of the base plate are de-coupled from the vehicle.

The vibrator can be driven by any way suitable for the purpose. These ways are known to those skilled in the art and will not be described in detail.

Generally it can be said that the force exerted on the earth surface by the base plate of the vibrator, the so-called ground-force, determines seismic phenomena occurring at a large distance from the vibrator. In other words, the ground-force can be considered as an output signal of the seismic vibrator

In order to be able to derive desirable information about the ground-force such as amplitude- and phase-spectra, it is necessary to measure accurately the actual ground-force of the seismic vibrator. Conventional methods for determining the ground-force of a seismic vibrator have been based upon determining the masses and accelerations of the reaction mass and baseplate construction respectively and deriving from these quantities the ground-force of the seismic vibrator by assuming a balance of forces:

$F$ ground $= -M_m.a_m - M_{bp}.a_{bp}$

in which $M_m$ = mass of reaction mass

$a_m$ = acceleration of reaction mass (positive sign, if directed to the earth surface)

$M_{bp}$ = mass of base plate

$a_{bp}$ = acceleration of base plate (positive sign, if directed to the earth surface).

However, from experiments it appeared that the ground-force derived in the above manner could not be considered as a correct representation of the actual ground-force imparted to the earth surface since the above methods for determining the ground-force from the balance of forces assume that the base plate is a rigid base plate. However, it appears that such an assumption is not always correct.

Base plate bending causes different parts of the base plate to move with different accelerations. To compensate for this phenomenon an effective base plate acceleration should be defined that differs from the acceleration at a particular point, or an effective base plate mass should be used that is different from the true base plate mass. Another cause for the above discrepancy is the force loss through isolation bags used for decoupling the vehicle from the baseplate.

Thus, it is an object of the invention to provide a means for directly measuring the actual ground-force in an accurate manner. The invention therefore provides a means for measuring the force which, in use, is exerted by the base plate of a seismic vibrator on the earth surface, characterized by a plurality of individual sensor elements, which are arranged on the side of the said baseplate which, in use, is directed to the earth surface.

The invention will now be described by way of example in more detail with reference to the accompanying drawings, in which

Fig. 1 represents an advantageous embodiment of the invention;

Fig. 2 represents a detail of the embodiment of fig. 1;

Fig. 3 represents a detail of fig. 2.

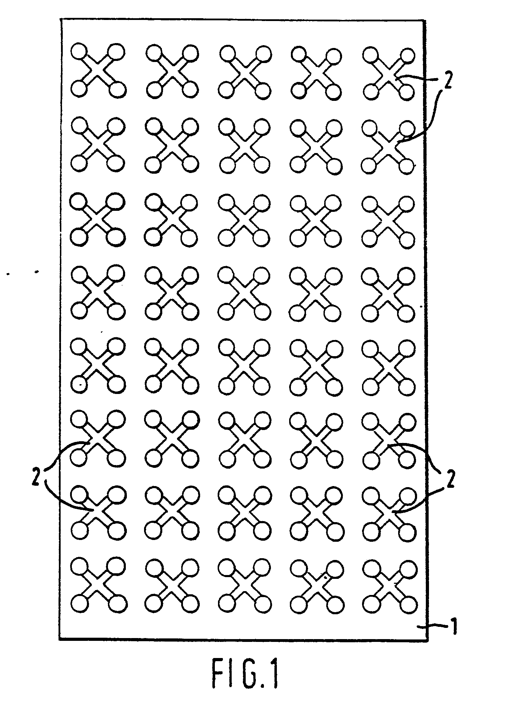

With reference now to fig. 1 a base plate of a seismic vibrator comprises a side 1 which, in use, is directed to the earth surface. As already discussed earlier, the operation of seismic vibrators as such is known and will not be described in detail. The side 1 of the rectangular base plate comprises a plurality of individual sensor elements 2 divided in a regular manner on the surface of the side 1. The arrangement of the sensor elements 2 on the base plate is such that the force generated by the vibrator is imparted to the ground totally through the sensor elements only, and not through any other contact points beween base plate and ground. In this embodiment a matrix of 8 × 5 piezo-electric sensor elements 2 has been represented. The sensors are connected mechanically to the base plate by any connecting and fixing means suitable for the purpose (not shown, for reasons of clarity). The operation of piezo-electric element as such is known to those skilled in the art and will not be described in detail. In this embodiment of the invention the length of the side 1 is about 2 meters and its width is about 1 meter. For reasons of clarity no electrical and mechanical connections of the base plate to the seismic vibrator have been represented.

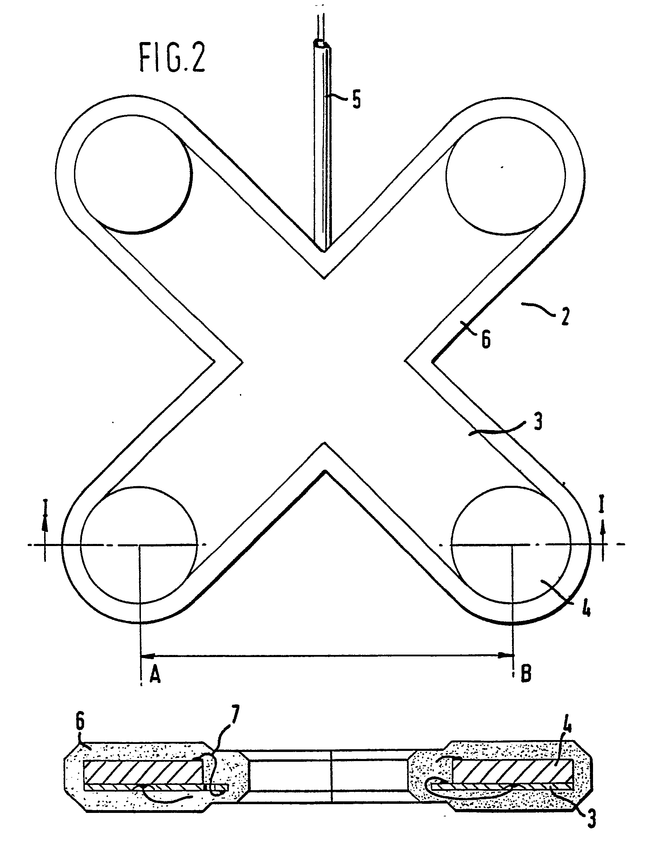

Fig. 2 represents a sensor element 2 comprising a cross-shaped mounting plate 3 of any material suitable for the purpose, for example epoxy glass fibre with a copper layer on its both sides. The mounting plate 3 comprises a plurality of discs 4 of piezo-electric material. The discs 4 are arranged on the side of the mounting plate, which, in use, is directed to the earth surface.

In a practical embodiment the distance A—B is 10 cm. In this embodiment four discs 4 of piezo-electric material are provided on the mounting plate 3, one disc at each end of the cross-shaped mounting plate.

An electric connecting cable 5 for the piezo-electric discs has been connected to the opposite side of the mounting plate 3. For reasons of clarity, only part of the electric cable 5 has been represented. The mounting plate 3 and the discs 4 are embedded in a suitable cast mass 6, for example reinforced epoxy resin.

Fig. 3 represents a cross-section of the sensor element 2 along the line I—I of fig. 2.

The same reference numerals as in figures 1 and 2 have been used.

Further, electrical connections 7 of the piezo-electric discs 4 have been shown (partially only for reasons of clarity).

It will be appreciated that any suitable number of sensors can be used provided that the arrangement of the sensors is such that all vibrator force is imparted from the base plate through the sensors into the earth surface. Advantageous embodiments of the invention comprise 10—100 and more in particular 20—80 sensors. The sensors may, for example, be arranged in an n x m matrix (wherein n and m are integers). It will also be appreciated that any shape and dimensions of the base plate and sensors suitable for the purpose can be used. In an advantageous embodiment of the invention the sensors are "sandwiched" between two support plates.

Various modifications of the invention will become apparent to those skilled in the art from the foregoing description and accompanying drawings. Such modifications are intended to fall within the scope of the appended claims.

## Claims

1. A means for measuring the force which, in use, is exerted by the base plate of a seismic vibrator on the earth surface, characterized by a plurality of individual sensor elements, which are arranged on the side of the said base plate which, in use, is directed to the earth surface.

2. The means as claimed in claim 1 characterized in that 10—100 sensor elements are present.

3. The means as claimed in claim 1 or 2, characterized in that the said sensors are arranged on a rectangular base plate.

4. The means as claimed in any one of claims 1—3 characterized in that the said sensors are arranged in an n x m matrix, wherein n and m are integers.

5. The means as claimed in any one of claims 1—4 characterized in that each sensor comprises a mounting plate provided with piezo-electric material.

6. The means as claimed in claim 5 characterized in that the said mounting plate is cross-shaped.

7. The means as claimed in claim 6 characterized in that the cross-shaped mounting-plate is provided at its ends with discs of piezo-electric material.

8. The means as claimed in any one of claims 5—7 characterized by a mounting plate of epoxy glass fibres.

9. The means as claimed in any one of claims 5—8 characterized in that the said mounting plate is provided with copper layers on its both sides.

10. The means as claimed in any one of claims 7—9 characterized in that the said mounting plate and discs are embedded in epoxy resin.

## Patentansprüche

1. Vorrichtung zur Messung der Kraft, welche von der Basisplatte eines seismischen Vibrators bei Gebrauch auf die Erdoberfläche ausgeübt wird, gekennzeichnet durch eine Vielzahl von einzelnen Sensorelementen, die auf der Seite der Basisplatte angeordnet sind, die bei Gebrauch auf die Erdoberfläche gerichtet ist.

2. Vorrichtung, wie in Anspruch 1 beansprucht, dadurch gekennzeichnet, daß 10 bis 100 Sensorelemente vorhanden sind.

3. Vorrichtung, wie in Anspruch 1 oder 2 beansprucht, dadurch gekennzeichnet, daß die Sensoren auf einer rechteckigen Basisplatte angeordnet sind.

4. Vorrichtung, wie in einem der Ansprüche 1 bis 3 beansprucht, dadurch gekennzeichnet, daß die Sensoren in einer n x m-Matrix angeordnet sind, wobei n und m ganze Zahlen sind.

5. Vorrichtung, wie in einem der Ansprüche 1 bis 4 beansprucht, dadurch gekennzeichnet, daß jeder Sensor eine mit einem piezoelektrischen Material versehene Befestigungsplatte umfaßt.

6. Vorrichtung, wie in Anspruch 5 beansprucht, dadurch gekennzeichnet, daß die Befestigungsplatte kreuzförmig ist.

7. Vorrichtung, wie in Anspruch 6 beansprucht, dadurch gekennzeichnet, daß die kreuzförmige Befestigungsplatte in ihren Enden mit Scheiben aus piezoelektrischem Material versehen ist.

8. Vorrichtung, wie in einem der Ansprüche 5 bis 7 beansprucht, gekennzeichnet durch eine Befestigungsplatte aus Epoxyglasfaser.

9. Vorrichtung, wie in einem der Ansprüche 5 bis 8 beansprucht, dadurch gekennzeichnet, daß die Befestigungsplatte mit Kupferschichten auf ihren beiden Seiten versehen ist.

10. Vorrichtung, wie in einem der Ansprüche 7 bis 9 beansprucht, dadurch gekennzeichnet, daß die Befestigungsplatte und die Scheiben in Epoxyharz eingebettet sind.

## Revendications

1. Dispositif destiné à mesurer la force qui, en service, est exercée par la plaque de base d'un vibrateur sismique sur la surface de la terre, caractérisé par une pluralité d'éléments individuels formant jauges, qui sont rangés sur la face de ladite plaque de base qui, en service, est dirigée vers la surface de la terre.

2. Dispositif selon la revendication 1 caractérisé en ce que 10 à 100 éléments formant jauges s'y trouvent.

3. Dispositif selon la revendication 1 ou la revendication 2, caractérisé en ce que lesdites jauges sont rangées sur une plaque de base rectangulaire.

4. Dispositif selon l'une quelconque des revendications 1 à 3 caractérisé en ce que lesdites jauges sont rangées en une matrice n × m, où n et m sont des nombres entiers.

5. Dispositif selon l'une quelconque des revendications 1 à 4 caractérisé en ce que chaque jauge comprend une plaque formant monture pourvue de matière piézo-électrique.

6. Dispositif selon la revendication 5, caractérisé en ce que ladite plaque formant monture est cruciforme.

7. Dispositif selon la revendication 6 caractérisé en ce que la plaque formant monture cruciforme est munie à ses extrémités de disques faits de matière piézo-électrique.

8. Dispositif selon l'une quelconque des revendications 5 à 7 caractérisé par une plaque formant monture faite de fibre de verre époxyde.

9. Dispositif selon l'une quelconque des revendications 5 à 8 caractérisé en ce que ladite plaque formant monture est munie de couches de cuivre sur ses deux faces.

10. Dispositif selon l'une quelconque des revendications 7 à 9 charactérisé en ce que ladite plaque formant monture et lesdits disques sont enrobés dans de la résine époxyde.

FIG.1

FIG.2